(19) Europäisches Patentamt

European Patent Office

Office européen des brevets

(11) EP 3 483 029 A1
(12) **EUROPEAN PATENT APPLICATION**

(43) Date of publication:
15.05.2019 Bulletin 2019/20

(21) Application number: 17290147.2

(22) Date of filing: 10.11.2017

(51) Int Cl.:
B61L 1/20 (2006.01)   B61C 15/08 (2006.01)
B60L 3/10 (2006.01)   B61L 15/00 (2006.01)
B61L 23/04 (2006.01)   B61L 25/02 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Siemens Aktiengesellschaft
80333 München (DE)
(72) Inventors:
• Loric, Marina
  F-75014 Paris (FR)
• Ueckert, Steffen
  DE-31275 Lehrte (DE)

(74) Representative: Maier, Daniel Oliver
Siemens AG
Postfach 22 16 34
80506 München (DE)

(54) **SYSTEM AND METHOD FOR TESTING ADHESION CONDITIONS ON A TRACK**

(57)    The present invention proposes to accelerate at least one wheelset axle of a guided vehicle up to or beyond an adhesion limit between a wheel of said wheelset and the rail supporting said wheel by applying a force F on said wheelset, and to determine, from a measure of a value of the force F for which said wheel began to slip, an adhesion coefficient that might be communicated to other guided vehicles and/or to a central station, notably in order to create and update a map of adhesion coefficients for a railway network.

FIG 1

EP 3 483 029 A1

## Description

The present invention concerns a system and a method for safely and efficiently testing adhesion conditions on tracks of a railway network.

The present invention is essentially related to a measurement of an adhesion coefficient at different locations on rails of tracks of a railway network in order to determine, for guided vehicles moving on said rails, adhesion conditions at said different locations. "Guided vehicle" refers herein to public transport means such as subways, trains or train subunits, etc., as well as load transporting means such as, for example, freight trains, for which safety is a very important factor and which are guided along a route or railway by at least one rail, in particular by two rails.

The adhesion condition is a critical parameter for guided vehicles, since it determines when the wheels of a guided vehicle will begin to slip or slide on the rails by accelerating or braking, and therefore when dangerous situations may occur. It is for instance an important parameter when determining which acceleration (positive or negative) might be applied to the powered axle wheels of a guided vehicle without having said wheels sliding on the rails.

Up to now, said acceleration was currently determined from a pessimistically low adhesion value which is constant for a track, said pessimistically low adhesion value being then the basis for traction and braking requests. Unfortunately, such pessimistically low adhesion value cannot take into account local variations of the adhesion. Another solution is based on the experience of the guided vehicle driver who estimates the guided vehicle acceleration according to his feeling, but such a solution is not objective and does not provide any quantitative measurement. Finally, another solution for determining an acceleration of a guided vehicle is based on adhesion values passed to the guided vehicle by order based on staff observations. Unfortunately, such solutions are not efficient and might be risky for the staff, since it requires staff moving at different locations on a railway network, interacting with the tracks while in use by guided vehicles, and furthermore, information regarding the adhesion conditions additionally needs to be transmitted to the guided vehicles.

An objective of the present invention is to propose a system and a method for safely and efficiently determining adhesion conditions of rails of a track.

For achieving said objective, the present invention proposes to use at least one axle of a guided vehicle, preferentially a powered axle, for testing adhesion conditions as disclosed in the objects of independent claims 1 and 10. Other advantages of the invention are presented in the dependent claims.

The present invention proposes notably a method for determining an adhesion coefficient $\mu$ for a rail with respect to a wheel of a wheelset of a guided vehicle, wherein said wheelset comprises an axle, preferentially a powered axle, and a pair of wheels coupled or fixed to said axle, the method comprising:

- accelerating, in particular continuously accelerating, the axle of at least one wheelset of the guided vehicle by applying a force F on said wheelset until wheels of said at least one wheelset begin to slip on the rails supporting said wheels. In particular, in case of positive acceleration, the force F is a tractive force applied to the axle, in this case preferentially a powered axle, by a motor of the guided vehicle, and in case of negative acceleration, the force F is either a braking force applied by a braking system on at least one wheel of the wheelset or the sum of the braking force applied by said braking system and an additional braking force applied on a powered axle by the motor of the guided vehicle;

- for each wheelset whose axle is accelerated, automatically determining a value F(slip) of the force F for which the wheels of the wheelset began to slip;

- automatically calculating, for at least one of the wheelsets whose axle has been accelerated, the adhesion coefficient $\mu$ of its wheel with the rail from said value of the force F and the normal force $F_n$ applied by the wheelset on the rails according to $\mu = F(slip)/F_n$, and optionally storing said adhesion coefficient for said wheelset, notably in function of the position within the railway network of the wheelset at the moment its axle has been accelerated for the purpose of the adhesion coefficient calculation. $F_n$ is in particular a predefined parameter determined for each wheelset of the guided vehicle comprising an axle, preferentially a powered axle, and that is preferentially stored in a database for the calculation of the adhesion coefficient. It can be for instance determined from the position of the wheelset within the guided vehicle and the knowledge of a mass repartition characterizing the guided vehicle. It can also be determined by measuring the weight applied by the wheels of the wheelset on a weighing scale or by sensors installed on the guided vehicle and capable of measuring or determining said weight.

The present invention also concerns a system for determining an adhesion coefficient for a rail with respect to a wheel of a wheelset of a guided vehicle comprising one or several wheelsets, the system comprising:

- a control unit configured for controlling a force F applied to at least one wheelset of the guided vehicle for accelerating the axle of said at least one wheelset up to or beyond an acceleration value for which wheels of the wheelset begin to slip on their respective rail, wherein, as explained before, the force F might be either a tractive force in case of a positive acceleration or a braking force in case of negative acceleration, wherein said axle is preferentially a powered axle;

- a measurement system configured for automatically determining, for each wheelset whose axle is accelerated, a value F(slip) of the force F for which its wheels began to slip, wherein the measurement system is further configured for providing to the control unit each determined value of the force F in order to enable the latter to automatically calculate the adhesion coefficient from

  ○ the determined value of the force F for each wheelset whose axle has been accelerated, and
  ○ a normal force $F_n$ applied by the wheels of the wheelset on the rails,

wherein the adhesion coefficient $\mu$ is given by $\mu = F(slip)/F_n$.

Further aspects and advantages of the present invention will be better understood through the following drawing:

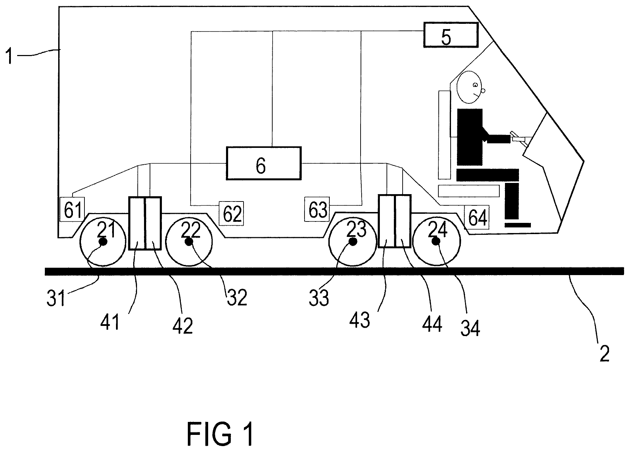

Figure 1     schematic representation of a system according to the invention for determining an adhesion coefficient for a rail.

Figure 1 illustrates a preferred embodiment of the system according to the invention, and schematically shows a guided vehicle 1 moving on a pair of rails 2 of a track of a railway network. The guided vehicle 1 comprises different wheelsets, each wheelset being a wheel-axle assembly comprising an axle 31 and a pair of wheels fixed or coupled to the axle 31. As usual, one of the wheels of the wheelset is supported by one of the rails 2 of said pair of rails 2 and interacts with the latter during acceleration and deceleration, and the other wheel of said wheelset is supported by the other one of said rails of the pair of rails 2, also interacting with the latter during acceleration and deceleration. According to the present invention, the track comprises typically said pair of rails 2, wherein each rail supports for each wheelset one of the wheels of the wheelset.

The axle 31 of some of the wheelsets of the guided vehicle might be coupled to a motor, for instance an electrically powered traction motor, by means of a transmission system which transmits the power and torque of the motor to the axle and therefore to the wheels coupled or fixed to the axle. In the following, a wheelset axle configured for being coupled to a motor is called a powered axle. Nevertheless, the present invention applies not only to powered axle, but to any axle 31 that can be accelerated, positively and/or negatively. The powered axle according to the invention is thus a wheelset axle coupled to a motor in order to transmit the speed and torque of said motor, i.e. its power, to the pair of wheelset wheels that are coupled or fixed to the axle. The wheels coupled or fixed to the powered axle are usually called "driving wheels" and are driven into rotation by the motor via the powered axle. The torque $\tau$ transmitted by the motor to the powered axle depends on a tractive force Ft delivered by the motor, a point on said powered axle where the tractive force is applied, and the distance r between said point and a rotational axis of the powered axle (called also "lever arm"), according to the known vector equation:

$$\vec{\tau} = \vec{r} \times \overrightarrow{Ft}.$$

In particular, each powered axle might be coupled by the transmission system to its own motor: in that case the powered axles are independently driven into rotation from each other by their respective motor. By this way, controlling the motor, i.e. the tractive force Ft of the motor, enables to control the rotational speed and torque applied to the driving wheels for each wheelset comprising a powered axle.

Figure 1 schematically shows a guided vehicle 1 comprising four wheelsets, wherein at least one wheelset comprises a powered axle fixed or coupled to a pair of wheels. A control unit 5 is configured for controlling the force F applied on each of said wheelsets for driving into rotation, and thus accelerating, the wheels of said wheelsets. Depending on the force F, the acceleration might be positive (increase of the rotational speed of the wheels in function of time) or negative (decrease of the rotational speed in function of time). In case of a positive acceleration, the force F is for instance the tractive force applied by a motor on the powered axle of a wheelset. In case of a negative acceleration, the force F is for instance a braking force applied by a braking system on the wheels of the wheelset or a force equals to the sum of said braking force and an additional braking force applied on the powered axle by the motor in order to decrease the rotational speed of the powered axle in function of time.

For instance and more particularly, a first powered axle 31 might couple a pair of driving wheels 21 to a first motor 41, a second powered axle 32 might couple a pair of driving wheels 22 to a second motor 42, a third powered axle 33 might couple a pair of driving wheels 23 to a third motor 43 and finally a fourth powered axle 34 might couple a pair of driving wheels 24 to a fourth motor 44. Preferentially, each motor 41-44 according to the invention might be connected to the control unit 5 in order to be controlled independently from each other by said control unit 5. Additionally, each wheelset comprising a powered axle might interact with a braking system capable of decreasing the rotational speed of the wheels of the wheelset in function of the time, by applying for instance said braking force to the wheels of the wheelset. In particular, a first braking system 61 might be configured for applying a braking force to the driving wheels 21, a second braking system 62 might be configured for applying a braking force to the driving wheels 22, a third braking system 63 might be configured for applying a braking force to the driving wheels 23, and a fourth braking system 64 might be configured for applying a braking force to the driving wheels 24. Preferentially, each braking system 61-64 according to the invention is connected to the control unit 5 which is configured for controlling said braking systems independently from each other.

In particular, the control unit 5 controls the tractive force Ft, i.e. the torque and speed, applied by each of the controlled motors 41-44 to the pair of driving wheels of the wheelset coupled to the motor through the powered axle of said wheelset, wherein the tractive force applied by one of said motors to a pair of driving wheels of one of the wheelsets might optionally be different from the tractive force applied by another of said motors to a pair of driving wheels of another of said wheelsets.

According to the present invention, the control unit 5 is configured for accelerating at least one of said powered axles up to or beyond an adhesion limit between the rail 2 and the driving wheels coupled or fixed to said accelerated powered axle. In particular, the control unit 5 is configured for controlling the tractive force Ft of at least one of the motors 41-45 of the guided vehicle 1 that is configured for driving into rotation the powered axle 31 of one of the wheelsets of the guided vehicle, so that the controlled motor accelerates (positively or negatively) said powered axle of one of the wheelsets up to an acceleration value for which the wheelset wheels 21 that are coupled or fixed to the powered axle 31 begin to slip on their respective rail 2.

Preferentially, the control unit 5 may control independently one or several motors at the same time in order to independently accelerate the powered axle of different wheelsets according to different accelerations through application of said tractive force to the powered axle of the different wheelsets. The control unit 5 is in particular configured for measuring at the same time the adhesion coefficient at different locations corresponding to the different railway network positions of the different wheelsets whose powered axle is accelerated by a motor whose tractive force is controlled by said control unit 5 and/or whose braking system is controlled by said control unit 5. During acceleration of the powered axle of one of the wheelsets according to the invention, at least another powered axle is not accelerated or accelerated differently, for instance so as to avoid any sliding of the wheels of the wheelset having its powered axle accelerated differently. For instance, by controlling the force F applied to different sets of wheelsets by means of the control unit 5, the powered axles of a first set of wheelsets of the guided vehicle are driven into rotation according to a nominal acceleration (which can be for instance a zero acceleration) and at least one powered axle of a second set of wheelsets of said guided vehicle is accelerated according to an acceleration value different from said nominal acceleration (for instance an acceleration different from zero) in order to achieve the claimed determination of the adhesion coefficient.

The control unit 5 is further connected to a measurement system 6 configured for automatically determining, for each wheelset whose powered axle 31 is accelerated, a value F(slip) of the force F applied to the wheelset and for which the pair of driving wheels of said wheelset began to slip. For instance, the measurement system 6 might be connected to each motor that is used for accelerating a powered axle according to the invention, and might be able to determine said value of the force F from a change of the rotational speed of the wheels of a wheelset submitted to said force F. Indeed, at the moment slipping begins, the rotational speed of the wheels suddenly changes (i.e. there is a discontinuity in the evolution of the rotational speed), and the measurement system 6 is for instance configured for detecting such a change in the rotational speed and determining for which force F said change occurred. In the case of a positive or negative acceleration, the measurement system 6 is capable of detecting in real time a discontinuity in a curve of the rotational speed in function of time and to determine which was the force F applied to the wheelset, for instance which was the tractive force Ft applied to the powered axle of the wheelset or which was the braking force applied to the wheels of the wheelset, when said discontinuity occurred. In the case of a negative acceleration, said discontinuity appears for instance when the curve of the rotational speed in function of the time becomes suddenly zero, and in the case of a positive acceleration, said discontinuity may appear for instance when the rotational speed suddenly increases to a value that is not continuous with previous values of the rotational speed. In particular, the measurement system 6 is configured for storing the force F applied to a wheelset in function of time in order to correlate a value of said force F with the time at which said sudden change of the rotational speed of a pair of driving wheels of a wheelset occurred.

According to another embodiment, the measurement system 6 is capable of determining the value of the force F for which the wheels of the wheelset submitted to said force F begin to sleep by comparing the rotational speed of the wheels of said wheelset with the rotational speed of wheels of another wheelset which are not accelerated by applying a force F and only characterized by a nominal acceleration. In that case, the value of the force F at the time a difference of rotational speed between the wheels of the wheelset to which the force F is applied and the wheels of the wheelset characterized by the nominal acceleration is detected by the measurement system 6 is taken for the calculation of the adhesion coefficient. In particular, said difference shall be greater than a predefined threshold.

From the determined value of the force F, the control unit 5 is further configured for automatically calculating the adhesion coefficient. Said adhesion coefficient $\mu$ might be obtained for instance from the following equation:

$$\mu = F(slip)/F_n \quad (Eq. 1)$$

wherein $F_n$ is the normal force applied by the wheels of the wheelset on the rails and F is the value of the force applied to a wheelset for accelerating the wheels of said wheelset when slipping of the wheels occurred, F being for instance the tractive force Ft or the braking force.

The obtained adhesion coefficient is a measure, for a wheelset, of the adhesion conditions of its pair of driving wheels on their respective rail. It represents an evaluation of the adhesion between a wheel of the wheelset and a rail of the track by considering that the pair of rails of the track and the pair of wheels of the wheelset have similar material and environmental characteristics.

As already explained before, in function of the force F applied to the wheelset, the acceleration according to the present invention might be positive (speed increasing with time) or negative (speed decreasing with time). Each motor 41-44 can for instance not only increase the speed and/or torque applied to the powered axle, but also decrease said speed and/or torque in order to decelerate the wheels of the wheelset. Optionally, the control unit 5 might also control, notably with respect to each controlled motor, at least one braking system 61-64 configured for applying a braking force on the wheels of a wheelset or on a rotational part of a wheelset, which is preferentially coupled to a controlled motor, in order to determine by means of the measurement system 6 a value of the braking force for which sliding between the wheels of the wheelset and their respective rail occurs.

According to the present invention, the determination of the adhesion coefficient for the rail with respect to a wheel (or pair of wheels) of a wheelset may take place during displacement of the guided vehicle on the railway network, and/or when the guided vehicle is at standstill. In both cases, at least one powered axle of the guided vehicle is accelerated by applying said force F until wheels of the accelerated powered axle begin to slip on their respective rail. During this acceleration, which is different from zero, at least one other powered axle has a rotational speed equals to zero if the guided vehicle is at standstill, or at least one other powered axle is characterized by a nominal acceleration (for instance equal to zero) which is different from the acceleration of the powered axle used for determining the adhesion coefficient. In particular, the present invention proposes to determine the adhesion coefficient by each guided vehicle of a railway network and at different locations on the railway network so as to enable the creation of a map of adhesion coefficients for said railway network and update said adhesion coefficients in real time from values of adhesion coefficients measured by the guided vehicles moving on said railway network.

Preferentially, the control unit 5 controls at least one of the motor 41-44 and/or one of the braking systems 61-64 so that the acceleration of the powered axle used according to the present invention for measuring the adhesion coefficient changes in function of the time (for instance it increases with time in case of positive acceleration or decreases with time in case of braking). In particular, or optionally, the control unit 5 may control different motors 41-44 so that each motor accelerates its coupled powered axle according to a different constant acceleration in order to search for a tractive force value for which wheels of the wheelset begin to slide on the rails. Similarly or additionally, the control unit 5 may control different braking systems 61-64 so that each braking system decelerates the wheels it is configured to interact with according to a different constant deceleration in order to search for a braking force value for which wheels of the wheelset begin to slide on the rails.

Once the tractive force value or braking force value for which the wheels of a wheelset whose powered axle has been accelerated began to slip has been determined, the control unit 5 automatically calculates an adhesion coefficient for the wheels of said wheelset from Eq.1 and preferentially stores said adhesion coefficient in a memory on-board the guided vehicle. Preferentially, the control unit 5 comprises a memory for storing each measured adhesion coefficient. In particular, the control unit 5 may also automatically set a limit to an acceleration and/or deceleration for the guided vehicle from the measured adhesion coefficient.

The control unit 5 preferentially also comprises a positioning system capable of determining the position within the railway network of each wheelset whose powered axle is accelerated for determining the adhesion coefficient. Since the position of the wheelset might be known by the positioning system, the position of each powered axle during acceleration of said powered axle according to the invention might also be known. In other words, the positioning system enables to associate to each calculated adhesion coefficient the position within the railway network of the wheelset (or powered axle) during the measure of the adhesion coefficient, i.e. during the acceleration of the powered wheelset. Preferentially, the control unit 5 is configured for storing, within said memory and for each stored adhesion coefficient, the position within the railway network of the powered axle that has been used for determining said stored adhesion coefficient.

According to a preferred embodiment of the present invention, the control unit 5 is configured for repeatedly controlling at least one of the motors 41-44 of the guided vehicle so that its coupled powered axle is repeatedly accelerated for the purpose of the adhesion coefficient measurement and determination. The repetition of the accelerations of the powered axle might be periodical and/or based on a geographic criterion, for instance one acceleration per defined area of the railway network or at different predefined positions of the guided vehicle, in order to have and up-to-date and complete evaluation of the adhesion conditions within the railway network. For each repeated acceleration of the powered axle, all the steps of the claimed method are performed, including for instance storing the adhesion coefficient and for said stored adhesion coefficient, the position of the powered axle which has been accelerated for determining said stored adhesion coefficient. Preferentially, the same applies mutatis mutandis for a repeated control of at least one of the braking systems 61-64 by the control system 5.

Preferentially, the present invention proposes to communicate, for instance by means of the control unit 5, at least one or each stored adhesion coefficient to another guided vehicle and/or to a central station, notably in order to maintain and update said map of the adhesion coefficient. For this purpose, the control unit 5 is in particular configured for transmitting, with each communicated adhesion coefficient, the position on the railway network stored for said communicated adhesion coefficient. Preferentially, the control unit 5 maintains in a database the stored adhesion coefficient, the position stored for said stored adhesion coefficients, and further stored in said database any adhesion coefficient and corresponding position received from another guided vehicle and/or from the central station. From the values of the adhesion coefficients and corresponding positions stored in said database, the control unit 5 is configured for determining limits to the acceleration and/or deceleration of the guided vehicle for each position stored within said database. Additionally, the control unit 5 may automatically construct and update, from the adhesion coefficients and positions stored in said database, a map of the adhesion coefficient for the railway network, said map showing for instance to a driver of the guided vehicle the stored adhesion coefficients at the different stored positions.

To summarize, the present invention proposes to apply a force F to at least one wheelset of a guided vehicle in order to accelerate or decelerate the powered axle of said at least one wheelset up to or beyond an adhesion limit between a wheel of said wheelset and the rail supporting said wheel, and to determine from a measure of a value of the force F for which said wheel began to slip an adhesion coefficient that might be communicated to other guided vehicles and/or to a central station, notably in order to create and update a map of adhesion coefficients for a railway network.

**Claims**

1. Method for determining an adhesion coefficient $\mu$ for a rail (2) of a railway network with respect to a wheel of a wheelset of a guided vehicle (1), wherein said guided vehicle (1) comprises at least one wheelset comprising an axle (31) and a pair of wheels (21) coupled or fixed to said axle (31), said guided vehicle (1) being configured for moving on said rail (2) of the railway network, the method comprising the following steps:

   a) applying a force F on at least one wheelset of the guided vehicle in order to accelerate its axle (31) until its wheels (21) begin to slip on their respective rail (2);
   b) for each wheelset whose axle (31) is accelerated, automatically determining for which value F(slip) of the force F its wheels (21) began to slip;
   c) automatically calculating, by means of a control unit (5) and for at least one of the wheelsets whose axle (31) has been accelerated, the adhesion coefficient $\mu$ from the determined value F(slip) of the force F according to $\mu = F(slip)/F_n$, wherein $F_n$ is the normal force applied by the wheels (21) of the wheelset on the rails (2).

2. Method according to claim 1, wherein the force F is a tractive force or a braking force, the method further comprising optionally an automatic on-board processing of the adhesion coefficient by the control unit (5) of the guided vehicle (1) for setting a limit to an acceleration and/or deceleration of the guided vehicle (1).

3. Method according to claim 1 or 2, comprising d) storing the adhesion coefficient.

4. Method according to claim 3, comprising determining a position, within the railway network and during the accelerating step, of the wheelset whose axle (31) is accelerated, and storing for each stored adhesion coefficient said determined position.

5. Method according to claim 3 or 4, comprising repeating steps (a)-(d) for different locations on the railway network.

6. Method according to claim 4 or 5, comprising communicating to another guided vehicle the stored adhesion coefficient and the position stored for said stored adhesion coefficient.

7. Method according to one of the claims 4 to 6, comprising automatically constructing and updating by means of the control unit (5) a map of the adhesion coefficient for the railway network, said map reporting the stored adhesion coefficient at the position stored for said stored adhesion coefficient.

8. Method according to one of the claims 1 to 7, wherein the acceleration of the axle (31) is different from a nominal acceleration characterizing at least another axle.

9. Method according to one of the claims 1 to 8, wherein step (a) takes place when the guided vehicle (1) is at standstill or moving.

**10.** Method according to one of the claims 1 to 9, wherein said axle (31) is a powered axle.

**11.** System for determining an adhesion coefficient μ for a rail (2) of a railway network with respect to wheels (21) of a wheelset of a guided vehicle (1) configured for moving on said rail (2) of the railway network, the guided vehicle (1) comprising at least one wheelset comprising an axle (31) and a pair of wheels (21) coupled or fixed to the axle (31), said system comprising:

a) a control unit (5) configured for controlling a force F applied to at least one of the wheelsets of the guided vehicle for accelerating its axle (31) until the wheels (21) of said wheelset begin to slip on their respective rail (2);
b) a measurement system (6) configured for automatically determining, for each wheelset whose axle (31) is accelerated, a value F(slip) of the force F for which its wheels (21) began to slip, said measurement system (6) being further configured to automatically provide to the control unit (5) each determined value of the force F for a calculation, by the control unit (5), of the adhesion coefficient from the determined value F(slip) for each wheelset whose axle (31) has been accelerated according to the equation $\mu = F(slip)/F_n$, wherein $F_n$ is the normal force applied by the wheels of the wheelset on the rails (2).

**12.** System according to claim 11, wherein the measurement system (6) transmits to the control unit (5) each determined value of the force F and the control unit (5) is configured for automatically setting a limit to acceleration and/or deceleration of the guided vehicle (2) from the adhesion coefficient calculated from each transmitted value of the force F.

**13.** System according to claim 11 or 12, wherein the control unit (5) comprises a positioning system for determining a position, within the railway network and during the accelerating step, of the wheelset whose axle (31) is accelerated, the control unit (5) being further configured for storing within a memory of the control unit (5) each measured adhesion coefficient and for each stored adhesion coefficient said position.

**14.** System according to claim 13, wherein the control unit (5) is configured for automatically constructing and updating a map of the adhesion coefficient for the railway network, said map reporting the stored adhesion coefficient at the position stored for said stored adhesion coefficient.

**15.** System according to one of the claims 10-14, wherein the control unit (5) is connected to a motor (41) capable of applying to the axle said force F in order to drive into rotation said axle (31) and optionally to a braking system configured for braking wheels (21) coupled to said axle (31), wherein the control unit (5) is configured for controlling the motor (41) in order to enable the determination of the adhesion coefficient.

FIG 1

Europäisches
Patentamt

European
Patent Office

Office européen
des brevets

# EUROPEAN SEARCH REPORT

Application Number

EP 17 29 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 168 111 A1 (KNORR-BREMSE SYSTEME FÜR SCHIENENFAHRZEUGE GMBH [DE]) 17 May 2017 (2017-05-17) * figures 1 and 3; paragraphs [0018] - [0026] * ----- | 1-15 | INV. B61L1/20 B61C15/08 B60L3/10 B61L15/00 B61L23/04 B61L25/02 |
| X | EP 2 918 459 A1 (BOMBARDIER TRANSP GMBH [DE]) 16 September 2015 (2015-09-16) * paragraphs [0003] - [0008] and [0055] - [0075] * ----- | 1-15 | |

TECHNICAL FIELDS SEARCHED (IPC)

B61L
B61C
B60L

The present search report has been drawn up for all claims

| Place of search | Date of completion of the search | Examiner |
|---|---|---|
| Munich | 3 May 2018 | Plützer, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 29 0147

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2018

| Patent document cited in search report | | Publication date | Patent family member(s) | | Publication date |
|---|---|---|---|---|---|
| EP 3168111 | A1 | 17-05-2017 | EP<br>WO | 3168111 A1<br>2017081145 A1 | 17-05-2017<br>18-05-2017 |
| EP 2918459 | A1 | 16-09-2015 | NONE | | |

EPO FORM P0459

For more details about this annex : see Official Journal of the European Patent Office, No. 12/82